(19)

Europäisches
Patentamt
European
Patent Office
Office européen
des brevets

(11) **EP 4 618 524 A1**

(12) **EUROPEAN PATENT APPLICATION**
published in accordance with Art. 153(4) EPC

(43) Date of publication:
**17.09.2025 Bulletin 2025/38**

(21) Application number: **23887561.1**

(22) Date of filing: **11.08.2023**

(51) International Patent Classification (IPC):
*H04M 3/42* *(2006.01)*

(52) Cooperative Patent Classification (CPC):
**H04M 3/42;** Y02P 90/30

(86) International application number:
**PCT/CN2023/112664**

(87) International publication number:
**WO 2024/098866 (16.05.2024 Gazette 2024/20)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **11.11.2022 CN 202211412274**

(71) Applicants:
• **Migu Co., Ltd.
Beijing 100032 (CN)**
• **China Mobile Communications Group Co., Ltd
Beijing 100032 (CN)**

(72) Inventors:
• **GUI, Zuhong
Beijing 100032 (CN)**
• **LI, Lin
Beijing 100032 (CN)**
• **BEI, Yue
Beijing 100032 (CN)**
• **ZOU, Yizhan
Beijing 100032 (CN)**
• **JIANG, Zhiying
Beijing 100032 (CN)**

(74) Representative: **GPI Brevets
1330, rue Guillibert de la Lauzière
EuroParc de Pichaury
Bât B2
13856 Aix en Provence Cedex 3 (FR)**

(54) **METHOD AND APPARATUS FOR SETTING VIDEO COLOR RINGBACK TONE, DEVICE, AND STORAGE MEDIUM**

(57)    Embodiment of the present disclosure provides a video color ringback tone setting method, device, apparatus and a storage medium. The method includes: in response to receiving a purchase request for a digital collectible from a first user, calling a first smart contract interface to implement transfer of rights and interests of the digital collectible and corresponding digital twin; wherein the digital collectible and the corresponding digital twin are obtained via minting and issuing a source file of the digital collectible based on intellectual property (IP) copyright; in response to receiving a secondary creation operation on the digital twin by a second user, obtaining an NFT video ringtone, where the digital twin is authorized by the first user; displaying the NFT video ringtone for a third user to order and set.

in response to receiving a purchase request for a digital collectible from a first user, calling a first smart contract interface to implement transfer of rights and interests of the digital collectible and the corresponding digital twin. — S110

in response to receiving a secondary creation operation on the digital twin by a second user, obtaining an NFT video ringtone — S120

displaying the NFT video ringtone for a third user to order and set — S130

FIG. 1

EP 4 618 524 A1

**Description**

**CROSS-REFERENCE TO RELATED APPLICATION**

The present application is filed based on and claims the priority of Chinese Application No. 202211412274.2 filed on November 11, 2022, the disclosure of which are incorporated in their entireties by reference herein.

**TECHNICAL FIELD**

The present disclosure relates to, but is not limited to, the field of computer technologies, and in particular to a video ringback tone setting method, device, apparatus and storage medium.

**BACKGROUND**

Video ringback tone is a unique music service exclusive to telecom operators. With continuous development of 4G/5G technologies, the traditional ringback tone market has undergone changes. As an upgraded product of the ringback tone, the video ringback tone brings better experience to users while generating new revenue growth points for the industrial chain, including content, products, terminals, and ecosystems. Meanwhile, the video ringback tone service also faces problems such as service model innovation and user participation improvement.

Currently, the setting of video ringback tones is primarily based on user's subscription and setting on a video ringback tone platform provided by the operator. After the setting is completed, when a calling user initiates a call to a called user, the video ringback tone platform plays the set video ringback tone to the calling user.

However, this method has the problem that users cannot trade the purchased video ringback tone products, and the users cannot engage in secondary creation based on the purchased video ringback tone products.

**SUMMARY**

In view of this, embodiments of the present application provide at least a video ringtone setting method, device, apparatus, and storage medium.

The technical solution of the present disclosure is as follows.

In a first aspect, one embodiment of the present application provides a video ring back tone setting method applied to a video ringback tone service platform, including:

in response to receiving a purchase request for a digital collectible from a first user, calling a first smart contract interface to implement transfer of rights and interests of the digital collectible and corresponding digital twin; wherein the digital collectible and the corresponding digital twin are obtained via minting and issuing a source file of the digital collectible based on intellectual property (IP) copyright;
in response to receiving a secondary creation operation on the digital twin by a second user, obtaining an NFT video ringtone;
displaying the NFT video ringtone for a third user to order and set.

In some embodiments, in response to receiving a purchase request for a digital collectible from a first user, calling a first smart contract interface to implement transfer of rights and interests of the digital collectible and corresponding digital twin, includes:

in response to receiving the purchase request for the digital collectible from the first user, recording an association relationship between the first user, the digital collectible, and the digital twin;
calling the first smart contract interface to put the association relationship on-chain, thereby achieving transfer of rights and interests of the digital collectible and the corresponding digital twin.

In some embodiments, after displaying the NFT video ringtone, the method further includes:

receiving and recording the third user's subscription request for the NFT video ringtone, and obtaining a user subscription record;
performing revenue distribution according to the user subscription record and a preset revenue split ratio; wherein the preset revenue split ratio is dynamically formulated based on service rules.

In some embodiments, the performing revenue distribution according to the user subscription record and a preset revenue split ratio, includes:

calling a second smart contract interface to obtain a current total order number of the NFT video ringback tone;
determining multiple participants of the NFT video ringback tone and a single subscription fee of the NFT video ringback tone based at least on the user subscription record;
determining a total revenue share for each participant based on the preset revenue split ratio, the single subscription fee of the NFT video ringtone, and the current subscription number.

In some embodiments, before receiving the purchase request for the digital collectible from the first user, the method further includes:

obtaining authorization of IP copyright for the digital collectible;
producing a source file and corresponding digital twin of the digital collectible based on the IP copyright;
completing minting and issuance of the source file of the digital collectible and the digital twin through a third smart contract interface.

In some embodiments, the producing a source file and corresponding digital twin of the digital collectible based on the IP copyright, includes:

generating different source files of the digital collectible by combining preset content generation elements; wherein the preset content generation elements include at least the followings: video resolution, headwear, hairstyle, background, unique digital number;
performing digital content watermarking and/or low-definition resolution processing to obtain the digital twin corresponding to the digital collectible, based on native content of the digital collectible.

In some embodiments, after transfer of rights and interests of the digital twin, the method further includes:

prompting the second user to participate in a content secondary creation process of the digital twin through an authorization prompt interface;
in response to the second user's confirmation of participation operation, displaying an editing interface for the second user to perform secondary creation operations on the digital twin; wherein the editing interface provides self-made templates and/or special effects, and is provided with preset controls, and the preset controls, when triggered, call a fourth smart contract interface to query attribute information of the source file of the digital collectible.

In some embodiments, after obtaining the NFT video ringtone, the method further includes:

reviewing the NFT video ringtone;
distributing the approved NFT video ringtone to a preset channel to display the NFT video ringtone.

In another aspect, one embodiment of the present disclosure further provides a video ringback tone setting device, including:

a rights transfer module configured to, in response to receiving a purchase request for a digital collectible from a first user, call a first smart contract interface to implement transfer of rights and interests of the digital collectible and the corresponding digital twin; wherein the digital collectible and the corresponding digital twin are obtained via minting and issuing a source file of the digital collectible based on the intellectual property (IP) copyright;
a secondary creation module configured to, in response to receiving a secondary creation operation on the digital twin by a second user, obtain an NFT video ringtone; where the digital twin is authorized by the first user;
a management and display module configured to display the NFT video ringtone for a third user to order and set.

In yet another aspect, one embodiment of the present disclosure further provides a computing device, including: a processor and a memory; wherein the memory stores a computer program executable on the processor; wherein the computer program, when executed by the processor, causes the processor to perform part or all steps of the aforementioned video ringtone setting method.

In still yet another aspect, one embodiment of the present disclosure further provides a computer-readable storage medium storing a computer program, which, when executed by a processor, causes the processor to perform part or all steps of the aforementioned video ringtone setting method.

In the embodiment of the present application, first, in response to receiving a purchase request for a digital collectible from a first user, a first smart contract interface is called to implement the transfer of rights and interests of the digital collectible and the corresponding digital twin; secondly, in response to receiving a secondary creation operation on the digital twin from a second user, an NFT video ringtone is obtained; finally, the NFT video ringtone is displayed for ordering and setting by a third user. In this way, by minting and issuing the source files of the digital collectible, the digital collectible and digital twin on the chain are obtained, the digital twin is purchased and authorized by the first user, and then sold as an NFT video ringtone after secondary creation by the second user, thereby realizing the external display of the digital collectible in the form of a video ringtone, allowing collectors who purchase the digital collectible to form distribution and sale of the collection content through the video ringtone business logic. At the same time, the second user is supported to perform secondary creation on the digital twin, obtain and display the NFT video ringtone, which facilitates subscription by other users.

It should be understood that the foregoing general description and the following detailed description are merely exemplary and explanatory, and are not restrictive of the technical solutions disclosed herein.

**BRIEF DESCRIPTION OF THE DRAWINGS**

The drawings herein are incorporated into the specification and constitute a part of the specification. These drawings illustrate embodiments consistent with the present application and are used together with the specification to illustrate the technical solution of the present application.

FIG. 1 is an optional flowchart of a video ringback tone setting method according to an embodiment of the present application;

FIG. 2 is an optional flowchart of a video ringback tone setting method according to an embodiment of the present application;

FIG. 3 is an optional flowchart of a video ringback tone setting method according to an embodiment of the present application;

FIG. 4 is a schematic diagram of generating a corresponding digital twin product based on a digital collectible according to an embodiment of the present application;

FIG. 5A is a system block diagram of a video ringback tone setting method according to an embodiment of the present application;

FIG. 5B is a logic flowchart of a video ringback tone setting method according to an embodiment of the present application;

FIG. 5C is a schematic diagram of a UGC secondary creation editing page according to an embodiment of the present application;

FIG. 6 is a schematic diagram of a video ringback tone setting device according to an embodiment of the present application; and

FIG. 7 is a schematic diagram of hardware entities of a computer device according to an embodiment of the present application.

Reference signs: 41-digital collectible; 42-digital twin product; 51-video ringback tone access module; 52-NFT capability module; 53-video ringback tone DIY production module; 54-video ringback tone distribution management module; 55-video ringback tone management and display module; 56-settlement and billing module; 531-editing page.

**DETAILED DESCRIPTION**

In order to make the purpose, technical solutions and advantages of the present application clearer, the technical solutions of the present application are further described in detail hereinafter in conjunction with the drawings and embodiments. The described embodiments should not be regarded as limiting the present application. All other embodiments obtained by ordinary technicians in the field without making creative work are within the protection scope of the present application.

In the following description, reference is made to "some embodiments", which describe a subset of all possible embodiments, but it will be understood that "some embodiments" may be the same subset or different subsets of all possible embodiments and may be combined with each other without conflict.

The terms "first/second/third" involved are merely used to distinguish similar objects and do not represent a specific ordering of the objects. It is understandable that "first/second/third" can be interchanged with a specific order or sequence where permitted, so that the embodiments of the present application described herein can be implemented in an order other than that illustrated or described herein.

Unless otherwise defined, all technical and scientific terms used herein have the same meaning as those commonly understood by those skilled in the art to which the present application belongs. The terms used herein are only for the purpose of describing the present application and are not intended to limit the present application.

Before further describing the embodiments of the present application in detail, the nouns and terms involved in the embodiments of the present application are explained first. The nouns and terms involved in the embodiments of the present application are subject to the following interpretations.

Digital collectible refers to unique digital certificate generated for a specific work and artwork by using blockchain technology, which enables authentic digital distribution, purchase, collection and use on the basis of protecting digital copyrights. The digital collectible is a new form of digital publications, and are divided into two product types: blockchain work copyrights and blockchain digital publishing products.

Non-fungible Token (NFT) refers to an encrypted digital ownership certificate built on blockchain technology, which is non-replicable, non-tamperable, and non-divisible, representing physical assets such as physical collectibles and virtual assets such as images, music and game props.

Common tokens such as Bitcoin (BTC) and Ether (ETH) are fungible. Each BTC is identical, interchangeable, and divisible. The important feature of NFT is that each NFT has a unique and distinct identifier, which is not interchangeable with each other, and the minimum unit is 1 and indivisible. Each NFT is mapped to a unique serial number on a specific blockchain, which cannot be tampered with, cannot be divided, and cannot be replaced with each other. These attributes make NFTs an ideal carrier for digital artworks. Each NFT represents a specific digital artwork or its limited-edition single replica, recording unalterable on-chain rights. Therefore, NFT is essentially different from fungible tokens such as virtual currencies, and it is supported by the actual value of digital goods and does not have any monetary attributes such as payment functions. NFT is unique because it is based on blockchain technology and has established a unique mapping relationship with specific digital goods since its birth, and it can serve as a corresponding and unique proof of rights for digital goods on a specific blockchain.

Since the first NFT project Cryptopunks in 2017, the NFT industry has gone through the embryonic stage and the exploration stage, and entered a period of rapid expansion in 2021. The NFT industry is still mainly based on initial sales, and the external display and circulation of NFTs are limited, which affects the consensus on the value of NFTs.

Currently, the setting of video ringback tones is primarily based on user's subscription and setting on a video ringback tone platform provided by the operator. After the setting is completed, when a calling user initiates a call to a called user, the video ringback tone platform plays the set video ringback tone to the calling user. With the continuous development of 4G/5G technology, the traditional video ringback tone business model is no longer adapted to the new technical environment, and user participation is poor.

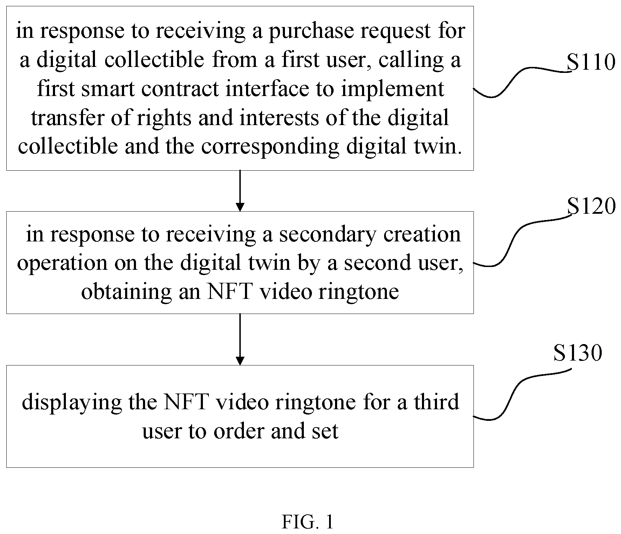

Embodiments of the present application provides a video ringback tone setting method, which can be executed by a processor of a computer device. The computer device may refer to a server, a laptop, a tablet computer, a desktop computer, a smart TV, a set-top box, a mobile device (such as a mobile phone, a portable video player, a personal digital assistant, a dedicated messaging device, a portable gaming device), and other devices that have the ability to set a video ringback tone. FIG. 1 is an optional flowchart of a video ringback tone setting method according to an embodiment of the present application. As shown in FIG. 1, the method includes the following steps S110 to S130.

Step S110: in response to receiving a purchase request for a digital collectible from a first user, calling a first smart contract interface to implement transfer of rights and interests of the digital collectible and the corresponding digital twin.

Here, the digital collectible and the corresponding digital twin are obtained by a service ringback tone operator via minting and issuing a source file of the digital collectible based on the intellectual property (IP) copyright. For example, through the digital collectible engine capability, attribute information of the source file such as resolution, character headdress, hairstyle, background, etc. is encrypted and uploaded to the chain, and the issuance volume and issuance price are configured to complete the minting and issuance of the digital collectible.

The content of the digital collectible may be a text document, a picture, a video or other data that can be stored in a computer hard disk, such as a painting by an artist or a speech video of a well-known entrepreneur, etc., which is not limited in the embodiments of the present application.

It is to be noted that before minting and issuing the digital collectible, the video ringtone service operator will carry out IP copyright cooperation with the copyright owner of the digital collectible, and obtain the copyright owner's rights to develop IP-based digital collectible NFTs and secondary creation and sales of video ringtones.

Step S120: in response to receiving a secondary creation operation on the digital twin by a second user, obtaining an NFT video ringtone.

Here, the digital twin is authorized by the first user, i.e., the purchaser of the digital collectible, and is used by the second user, i.e., the creator, to re-create and subscribe to video ringtones, thereby avoiding the theft of source files and effectively protecting IP copyright. The second user may be the same as the first user or different from the first user.

After the first user purchases the digital collectible, the first user obtains the ownership of the digital collectible and simultaneously obtains secondary creation rights to the content of the corresponding digital twin, so that the first user can authorize other second user to perform secondary creation on the collectible content of the digital twin product.

Optionally, a user authorization page is designed on a video ringback tone service platform to prompt the second user to authorize participation. The second user consults and understands secondary creation rules and profit sharing model of user-generated content (UGC), chooses to authorize participation in the creation activity, and performs secondary creation operations on the digital twin through templates, special effects, and other do it yourself (DIY) production capabilities provided by the platform.

It is worth noting that after the second user completes the creation, the video ringtone service platform records mapping relationship between an NFT video ringtone and a digital collectible source file, and associates the NFT video ringtone with the second user's identifier (ID) for subsequent queries.

Step S130: displaying the NFT video ringtone for a third user to order and set.

Here, the NFT video ringback tone is displayed through the video ringback tone service platform, and the third user purchases the NFT video ringback tone through a third-party payment platform and further sets it as his own call ringback tone.

In some embodiments, the content of the NFT video ringtone created by the second user, after being reviewed and approved, is published to a music application (APP) associated with the video ringtone service platform or a preset channel in the palm hall for displaying. For example, a special area for selling digital collectibles is provided on a main interface of the palm hall, NFT video ringtones are displayed, and users are prompted to order on demand.

In some embodiments, when purchasing an NFT video ringtone, the third user logs in to the music APP or the palm hall associated with the video ringtone service platform, searches for and selects the NFT video ringtone for purchase, and then jumps to a third-party payment platform to pay the price and handling fee of the NFT video ringtone. After that, the music APP or the palm hall displays the ownership information, and the third user can enter the "personal center" interface of the music APP or the palm hall to set the NFT video ringtone as his or her own exclusive ringtone.

In the embodiment of the present application, first, in response to receiving a purchase request for a digital collectible from a first user, a first smart contract interface is called to implement the transfer of rights and interests of the digital collectible and the corresponding digital twin; secondly, in response to receiving a secondary creation operation on the digital twin from a second user, an NFT video ringtone is obtained; finally, the NFT video ringtone is displayed for ordering and setting by a third user. In this way, by minting and issuing the source files of the digital collectible, the digital collectible and digital twin on the chain are obtained, the digital twin is purchased and authorized by the first user, and then sold as an NFT video ringtone after secondary creation by the second user, thereby realizing the external display of the digital collectible in the form of a video ringtone, allowing collectors who purchase the digital collectible to form distribution and sale of the collection content through the video ringtone business logic. At the same time, the second user is supported to perform secondary creation on the digital twin, obtain and display the NFT video ringtone, which facilitates subscription by other users.

In some embodiments, the above step S110 may include the following steps S111 to S112.

Step S111: in response to receiving a purchase request for a digital collectible from the first user, recording an association relationship between the first user, the digital collectible, and the digital twin.

Here, the video ringback tone service platform associates the first user's identifier (uID), the digital collectible's identifier (NFT-Token-ID), and the corresponding digital twin's identifier (twin-ID) to form an association relationship such as (uID, NFT-Token-ID, twin-ID).

Step S112: calling the first smart contract interface to put the association relationship on-chain, thereby achieving transfer of rights and interests of the digital collectible and the corresponding digital twin.

Here, the first smart contract interface is an NFT contract interface such as safeTransferFrom, so that the on-chain association relationship can be traded and the rights and interests transfer of the digital collectible corresponding to the digital twin can be completed.

In the above embodiment, in response to receiving the purchase request for the digital collectible from the first user, the video ringback tone service platform records the association relationship between the collectible purchaser and the digital collectible and its digital twin, and then the transfer of rights and interests of the digital collectible can be completed through the first smart contract interface, so that the first user, i.e., the collectible purchaser, obtains the ownership of the digital collectible and the corresponding content secondary creation rights of the digital twin.

In some embodiments, after the transfer of rights to the digital twin in step S110, the method further includes the following steps:

Step S113: prompting the second user to participate in a content secondary creation process of the digital twin through an authorization prompt interface.

Here, the authorization prompt interface can display the secondary creation rules and profit model of user generated content (UGC) of digital collectibles. The second user can confirm to participate in the secondary creation activity after reviewing and receiving the above rules.

The concept of UGC is originated in the internet field, that is, users display their original content through the internet platform or provide it to other users. UGC is emerged along with the concept of Web2.0, which advocates personalization as its main feature, and it can also be called user-created content (UCC). It is not a specific service, but a new way for users to use the internet, that is, from the original download-oriented to download and upload. With development of internet applications, interaction of network users has been reflected, and users are both browsers and creators of network content. Websites such as YouTube can be regarded as successful cases of UGC. Community networks, video sharing, blogs and podcasts (video sharing) are all major application forms of UGC.

Step S114: in response to the second user's confirmation of participation operation, displaying an editing interface for the second user to perform secondary creation operations on the digital twin.

Here, the editing interface provides self-made templates and/or special effects, and is provided with preset controls. The preset controls, when triggered, call a fourth smart contract interface to query attribute information of the source file of the digital collectible. The fourth smart contract interface can be a tokenURI, which is used to obtain uniform resource identifier (URI) of storage of the source file of the digital collectible.

In some embodiments, after obtaining the NFT video ringback tone in the step S120, the method further includes the following steps S121 to S122.

Step S121: reviewing the NFT video ringtone.

Here, the video ringtone service platform reviews whether the NFT video ringtone created by the second user complies with the specifications and relevant requirements, such as the resolution cannot exceed 720P or the original digital collectible has not been maliciously tampered with.

Step S122: distributing the approved NFT video ringtone to a preset channel to display the NFT video ringtone.

Here, the preset channel is the music APP or palm office associated with the video ringback tone service platform. The content of the NFT video ringback tone created by the second user, after being reviewed and approved, is published to preset channels such as the music APP or palm office associated with the video ringback tone service platform for displaying. For example, a special area for selling digital collectibles is provided on a main interface of the palm hall, NFT video ringtones are displayed, and users are prompted to order on demand.

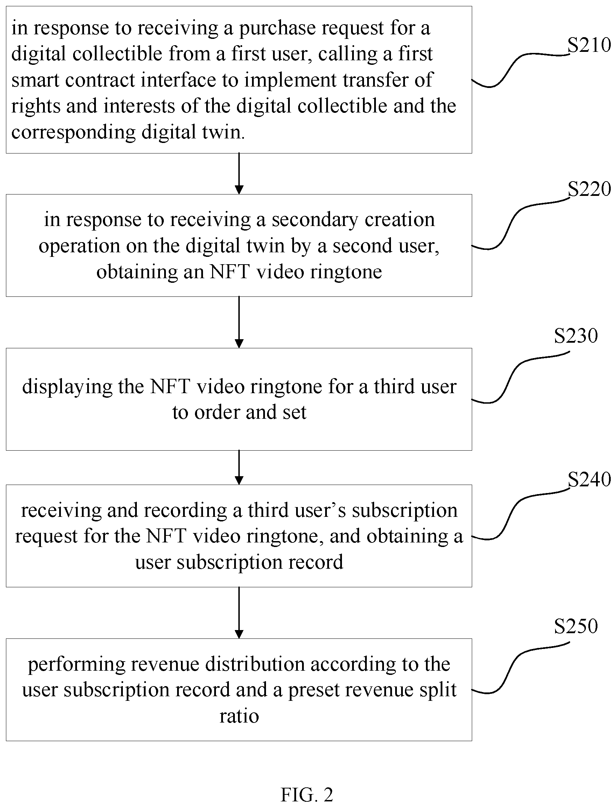

FIG. 2 is an optional flowchart of a video ringback tone setting method according to an embodiment of the present application. As shown in FIG. 2, the method includes the following steps S210 to S250.

Step S210: in response to receiving a purchase request for a digital collectible from a first user, calling a first smart contract interface to implement transfer of rights and interests of the digital collectible and the corresponding digital twin.

Here, the digital collectible and the corresponding digital twin are obtained by a service ringback tone operator via minting and issuing a source file of the digital collectible based on the intellectual property (IP) copyright.

Step S220: in response to receiving a secondary creation operation on the digital twin by a second user, obtaining an NFT video ringtone.

Here, the digital twin is authorized by the first user.

Step S230: displaying the NFT video ringtone for a third user to order and set.

Here, the above steps S210 to S230 correspond to the above steps S110 to S130 respectively, and the specific implementation of the above steps S110 to S130 may be referred to during implementation.

Step S240: receiving and recording a third user's subscription request for the NFT video ringtone, and obtaining a user subscription record.

Here, the third user is an internet user, which can be the same as the first user or the second user, or other users. In some embodiments, the third user who has activated the video ringback tone function directly orders the NFT video ringback tone on a per-time basis through a third-party payment platform. In other embodiments, the third user who has not activated the video ringback tone function activates the video ringback tone function for free through the universal interface provided by the video ringback tone service platform, and then orders the NFT video ringback tone.

In some embodiments, after displaying the NFT video ringtone, the third user previews the NFT video ringtone posted by the second user, and completes a pay-per-view subscription to a specific NFT video ringtone according to the prompts. In response to the NFT video ringtone being successfully subscribed, the video ringtone service platform records each subscription information to form a user subscription record.

The user subscription record may include an identifier of the third user, an identifier of a creator of the subscribed NFT video ringtone, i.e., the second user, and the corresponding digital twin, etc. The user subscription record may also include the digital twin simultaneously associated with the corresponding digital collectible and an identifier of the first user who purchases the digital collectible.

Step S250: performing revenue distribution according to the user subscription record and a preset revenue split ratio.

Here, from the above description, it can be known that various participants of NFT video ringtones, such as the first user, the second user, the third user, the copyright holder of the digital collectible, the video ringtone operator, etc., can be further inferred based on the user subscription record. Therefore, after the NFT video ringtone is ordered, the ordering income will be divided among the participants according to the preset revenue split ratio.

The preset revenue split ratio is dynamically formulated based on service rules to ensure that the revenue split ratio is reasonable. For example, when the value of the digital collectible itself is much higher than the value of the video ringback tone, the revenue split ratio of the first user who purchases the digital collectible should be greater than the revenue split ratio of the second user who creates a secondary product based on the digital twin; when the number of users who order the NFT video ringback tone exceeds a certain number, the revenue split ratio of the second user should be increased.

In some embodiments, the revenue distribution among various participants of the NFT video ringtone is performed in the following manner: calling a second smart contract interface to obtain a current total order number of the NFT video ringback tone; determining multiple participants of the NFT video ringback tone and a single subscription fee of the NFT video ringback tone based at least on the user subscription record; determining a total revenue share for each participant based on the preset revenue split ratio, the single subscription fee of the NFT video ringtone, and the current subscription number. The second smart contract interface can be a totalTwinOrders interface, which is used to return the total subscription number of NFT video ringback tone.

In some embodiments, the revenue shares for each participant of the NFT video ringback tone are determined by the following formula:

$$S_i = W_i * Num_{orders} * M \quad \text{formula (1);}$$

Where $S_i$ represents a total revenue share for each participant, $Num_{orders}$ represents a total subscription number of NFT video ringtone; $M$ represents a single subscription fee of the NFT video ringback tone; and $W_i$ represents a revenue split ratio of each participant.

In the embodiment of the present application, after displaying the NFT video ringback tone, a subscription request from a third user for a specific NFT video ringback tone is received and recorded to obtain the user subscription record; then the total subscription number of the current NFT video ringback tone is queried by calling the smart contract, and the revenue distribution is performed according to the user subscription record and a preset revenue split ratio. In this way, a mutually beneficial model can be achieved for all participants, including copyright holders, digital collectible buyers, video ringback tone service operators, and creators, thereby promoting development of video ringback tones and NFT services.

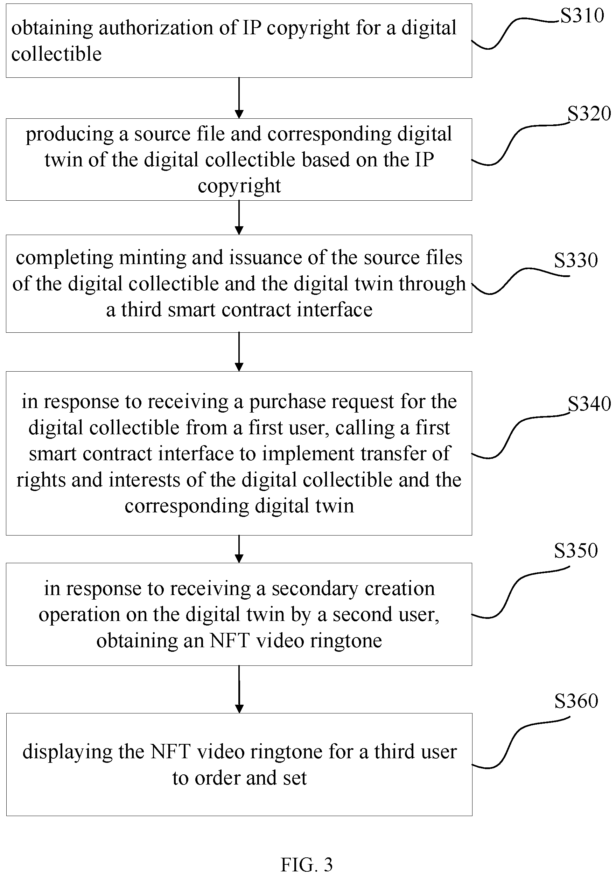

FIG. 3 is an optional flowchart of a video ringback tone setting method according to an embodiment of the present application. As shown in FIG. 3, the method includes the following steps S310 to S360.

Step S310: obtaining authorization of IP copyright for a digital collectible.

Here, the video ringtone service operator conducts IP copyright cooperation with the copyright owner, to obtain the copyright owner's right to develop digital collectibles based on the IP and to re-create and sell video ringtones based on digital collectible materials.

Step S320: producing a source file and corresponding digital twin of the digital collectible based on the IP copyright.

Here, the source file of the digital collectible is used for copyright evidence and digital asset rights proof, and the corresponding digital twin, i.e., twin file, is used for secondary creation and subscription of video ringtones to avoid the theft of the source file and effectively protect the IP copyright.

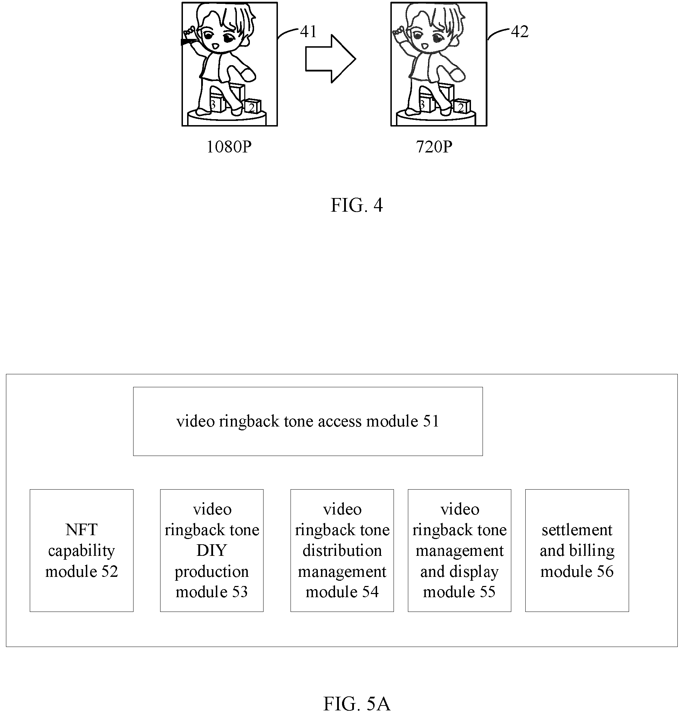

In some embodiments, different source files of the digital collectible are generated by combining preset content generation elements. The preset content generation elements include at least the following parameters: video resolution, headwear, hairstyle, background, unique digital number. Based on native content of the digital collectible, digital content watermarking and/or low-definition resolution processing are performed to obtain the digital twin corresponding to the digital collectible. As shown in FIG. 4, for a digital collectible 41, the original resolution is 1080P, and the 1080P is converted though a low-definition resolution processing, into a 720P image as a digital twin 42 corresponding to the digital collectible 41. That is, digital twin processing is performed on the original digital collectible to obtain the corresponding digital twin, which is conducive to the subsequent creation on digital twins, avoiding the theft of source files and protecting IP copyright.

Step S330: completing minting and issuance of the source files of the digital collectible and the digital twin through a third smart contract interface.

Here, the third smart contract interface is an NFT contract interface such as a mint interface, which is used to mint NFT. After the source file of the digital collectible and the corresponding digital twin are produced in the previous step, the source file of the digital collectible and the corresponding digital twin are uploaded to the digital collectible service platform; and the digital collectible minter, minting time, source file attribute information (resolution, headdress, hairstyle, background and other content production elements), and twin file attribute information (same source file) are encapsulated, and the mint interface is called to complete the minting and issuance of the collectible.

It is to be noted that the video ringtone operator provides a professional online digital collectible minting platform; as a trusted certificate system for digital collectibles in the blockchain, it relies on blockchain and artificial intelligence (AI) technology to support financial-grade encryption algorithms and cloud computing capabilities, distributes digital identities to creators and generates data keys (Datakey), and distributes digital IDs to each digital collectible. Only authorized users own the digital copyright of the digital collectible. This solves the problem of identity verification of digital resources and realizes assetization of digital resources.

Step S340: in response to receiving a purchase request for the digital collectible from a first user, calling a first smart contract interface to implement transfer of rights and interests of the digital collectible and the corresponding digital twin.

Here, the digital collectible and the corresponding digital twin are obtained by minting and issuing the source files of the digital collectible based on IP copyright.

Step S350: in response to receiving a secondary creation operation on the digital twin by a second user, obtaining an NFT video ringtone.

Here, the digital twin is authorized by the first user.

Step S360: displaying the NFT video ringtone for a third user to order and set.

Here, the above steps S340 to S360 correspond to the above steps S110 to S130 respectively, and the specific implementation of the above steps S110 to S130 may be referred to during implementation.

In the embodiment of the present application, the IP copyright authorization of the digital collectible is first obtained; then a source file and corresponding digital twin of the digital collectible are produced based on the IP copyright; and then, minting and issuance of the source files of the digital collectible and the digital twin are completed through a third smart contract interface; finally, the step of receiving the purchase request of the digital collectible by the first user is received. In this way, the embodiment of the present application realizes the NFT minting of original digital collectibles on the blockchain based on IP rights, while generating corresponding digital twins. Thereafter, the first user purchases the digital twin and authorizes the second user to perform secondary creation on the digital twin, resulting in a new NFT video ringtone, thereby expanding applications of NFT technology in video ringtone scenarios.

The above video ringback tone setting method is described hereinafter in conjunction with a specific embodiment. However, it should be noted that this specific embodiment is only for better illustrating the present application and does not constitute an improper limitation on the present application.

In view of the problems of bottlenecks in video ringtone business innovation models and limitations in NFT external display and circulation, one embodiment of the present application provides a video ringback tone setting method including: utilizing characteristics of video ringback tone promotion media to realize external video ringback tone display of a user's digital collectible; in combination with NFT to prove the rights and interests of digital content, performing UGC secondary creation based on NFT source files and publishing video ringback tone, thereby realizing a mutually beneficial model for all participants, including copyright holders, NFT buyers, video ringback tone and NFT capability operators, and UGC creators, and promoting the development of video ringback tone and NFT business.

FIG. 5A is a system block diagram of a video ringback tone setting method according to an embodiment of the present application. As shown in FIG. 5A, the system block diagram includes a video ringback tone access module 51, an NFT capability module 52, a video ringback tone DIY production module 53, a video ringback tone distribution management module 54, a video ringback tone management and display module 55, and a settlement and billing module 56.

The video ringback tone access module 51 is responsible for internet user login access, and is integrated with the NFT capability module 52, the video ringback tone DIY production module 53, the video ringback tone distribution management module 54, the video ringback tone management and display module 55, the settlement and billing module 56, etc.

The NFT capability module 52, namely the digital collectible service platform, is responsible for design and deployment of NFT smart contracts, as well as minting and issuance of digital collectibles, asset transfers, and subscription records of NFT video ringtones based on digital twin product secondary creations, etc. It provides services in the form of an application programming interface (API) or a software development kit (SDK).

The video ringtone DIY production module 53 is responsible for providing independent production capabilities such as templates and special effects, which facilitates UGC creators, i.e., second users, to perform secondary production of NFT video ringtones based on digital twins.

The video ringback tone distribution management module 54 is responsible for reviewing the NFT video ringback tone produced by UGC creators and distributing the NFT video ringback tone to corresponding channels.

The video ringback tone management and display module 55 provides internet users with functions such as one-click setting of NFT video ringback tone, call display, and activation of video ringback tone.

The settlement and billing module 56 is responsible for providing capabilities such as payment ordering, recording, and revenue-sharing rule design.

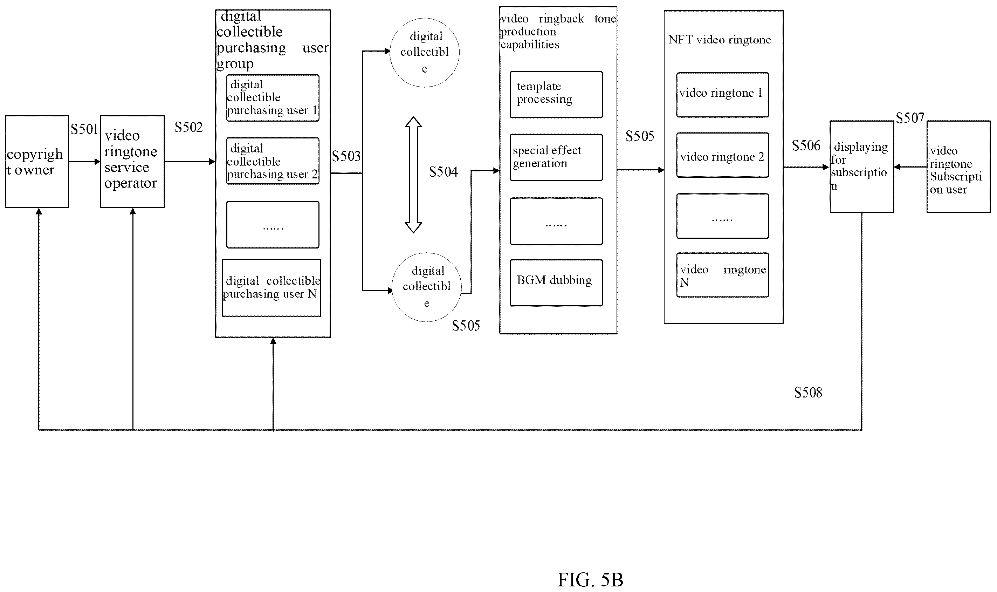

FIG. 5B is a logic flowchart of a video ringback tone setting method according to an embodiment of the present application. As shown in FIG. 5B, the method mainly includes the following steps S501 to S508.

Step S501: a video ringtone service operator conducting IP copyright cooperation with a copyright owner, to obtain the copyright owner's right to develop digital collectibles based on the IP and to re-create and sell video ringtones based on digital collectible materials.

Step S502: the video ringback tone service operator producing and selling an NFT digital collectible and corresponding digital twin based on the IP copyright.

Here, the digital twin is unique associated digital replica of the digital collectible, which is obtained by performing digital content watermarking, low-definition resolution and other processing on the original content of the digital collectible.

During the implementation, the video ringtone service operator first produces different source files of the digital collectible and corresponding digital twins by combining content generation elements such as video resolution (1080P), headwear, hairstyle, background, unique digital number. The source file is used for copyright evidence and digital asset rights proof, and the corresponding digital twin is used for secondary creation and subscription of video ringtones to avoid the theft of the source file and effectively protect the IP copyright.

Then, the source files of the digital collectible and the corresponding digital twin are uploaded to the NFT capability module, and the digital collectible minter, minting time, source file attribute information (resolution, headdress, hairstyle, background and other content production elements), and twin file attribute information (same source file) are encapsulated, and the mint interface of the NFT smart contract is called to complete the minting and issuance of the collectible.

Step S503: a purchaser of the digital collectible obtaining ownership of the digital collectible and corresponding content secondary creation rights of the digital twin.

Here, the purchaser of the digital collectible (equivalent to the first user) purchases the digital collectible through a service platform provided by the video ringback tone service operator, and calls safeTransferFrom interface of the smart contract to complete transfer of rights and interests of the digital collectible.

Step S504: the video ringback tone service platform recording association relationship between the user and the digital collectible and digital twin (uid, NFT-Token-ID, twin-ID).

step S505: a creator performing secondary content creation on the digital twin and creating an NFT video ringtone through video ringtone production capability provided by the video ringtone service platform.

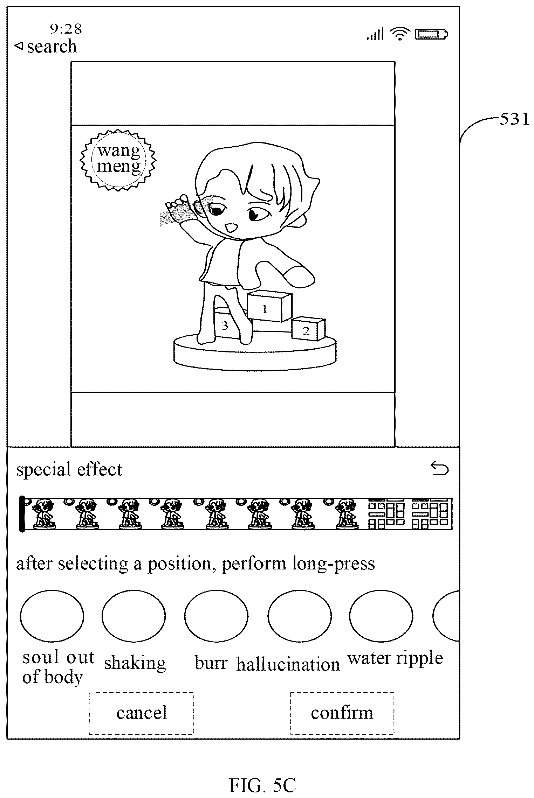

Here, as shown in FIG. 5C, it is assumed that a terminal held by a UGC creator is equipped with the video ringback tone service platform. After logging in, the UGC creator (equivalent to the second user) enters a UGC secondary creation editing page 531, which provides template processing, special effect generation, background music (BGM) dubbing and other video ringback tone production capabilities, including "soul out of body", "shaking", "burr", "hallucination", "water ripple" and other special effects. For a video, users can drag to select specific video frames within a designated area for feature enhancement; after selecting a position, perform long-press to activate the effect, so that real-time previews are displayed in the central region of the editing page 531. Meanwhile, the digital collectible engine SDK/API can be called to query source file information of the digital collectible, and secondary creation can be performed on the digital twin based on the source file information.

Step S506: after distribution of the secondary-created NFT video ringtones based on digital twin, displaying the secondary-created NFT video ringtones through the video ringback tone service platform for subscription.

Here, the NFT video ringtones produced by the creator are reviewed through the video ringtone distribution management module, and distributed to the music APP, palm hall, etc. provided by the video ringtone operator, and paid subscriptions are allowed.

Step S507: internet users subscribing to NFT video ringtones on a peruse basis through third-party payment. For internet users who do not have the video ringtone function, a backend interface is provided to directly enable free access.

The digital collectible capability module calls the intelligent cooperation interface such as emitOrder to record the number of user subscriptions, and the video ringback tone service platform records the user subscription as the basis for revenue sharing and settlement.

Step S508: calling a smart contract such as the totalTwinOrders interface to obtain the current subscription number, and dividing the revenue generated from video ringtone subscriptions among participating parties according to service rules, for example, through the aforementioned formula (1).

One embodiment of the present application further provides a video ringback tone and NFT setting system, including a video ringback tone access module, which is responsible for user login access and integrated with an NFT capability module, a video ringback tone DIY production module, a video ringback tone distribution management module, a video ringback tone management and display module, a settlement and billing module, etc.

The NFT capability module is responsible for design and deployment of NFT smart contracts, as well as minting and issuance of digital collectibles, asset transfer, subscription records of digital twin content secondary creation video ringtone, etc., providing services in the form of API or SDK. The key smart contracts involved in the embodiment of the present application are shown in Table 1.

Table 1 Key NFT smart contract interfaces

| NFT smart contract interface design | |
| --- | --- |
| contract interface | Interface description |
| mint | minting NFT |
| safeTransferFrom | NFT transactions and transfers, subject to stricter regulatory requirements |
| totalTwinOrders | returns total order number of NFT video ringtones |

(continued)

| NFT smart contract interface design | |
| --- | --- |
| emitOrder | when a user orders a video ringtone, order number is incremented by 1 |
| tokenURI | retrieve source file storage URI corresponding to the NFT |
| twinURI | retrieve the twin file storage URI corresponding to the NFT |
| ...... | ...... |

The video ringback tone DIY production module is responsible for providing production capabilities such as templates and special effects, so that users can make secondary creations of video ringback tone based on digital twin content.

The video ringback tone distribution management module is responsible for reviewing the video ringback tone produced by users and distributing the video ringback tone to the corresponding channels.

The video ringback tone management and display module provides users with one-click settings of video ringback tone, call display, and activation of video ringback tone function.

The settlement and billing module is responsible for providing payment subscription, record keeping, and revenue-sharing rule design capabilities.

The embodiments of the present application have at least the following technical effects: through service scenario design, the characteristics of video ringtones as promotional media are utilized to realize the external display of users' digital collectibles; through NFT smart contract design, a mutually beneficial model can be achieved for copyright holders, NFT buyers, video ringtones and NFT capability operators, and UGC creators; through the design of digital collectible source files and twin files, the source files are used for copyright evidence and digital asset rights and interests proof, and the twin files are used for secondary creation and subscription of video ringtone, thereby preventing theft of the source file and effectively protect the IP copyright.

It should be noted that, during implementation, the above collectible purchaser may correspond to the first user in the aforementioned embodiment, the UGC creator or creator may correspond to the second user in the aforementioned embodiment, and the internet user may correspond to the third user in the aforementioned embodiment.

Based on the foregoing embodiments, one embodiment of the present application provides a video ringback tone setting device. Modules included in the device and sub-modules included in each module can be implemented by a processor in a computer device, or can also be implemented by a specific logic circuit. In the implementation process, the processor can be a central processing unit (CPU), a microprocessor (MPU), a digital signal processor (DSP) or a field programmable gate array (FPGA), etc.

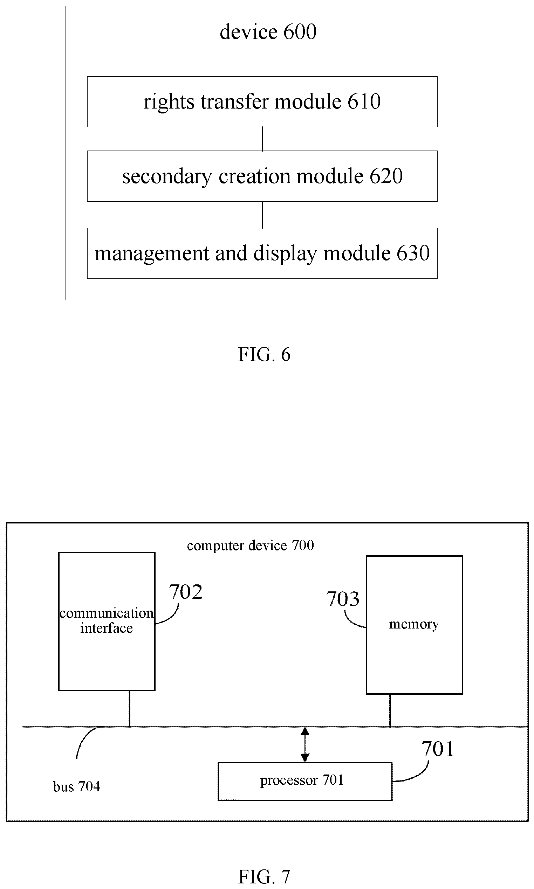

FIG. 6 is a schematic diagram of a video ringback tone setting device according to an embodiment of the present application. As shown in FIG. 6, the video ringback tone setting device 600 includes: a rights transfer module 610, a secondary creation module 620, and a management and display module 630.

The rights transfer module 610 is used to, in response to receiving a purchase request for a digital collectible from a first user, call a first smart contract interface to implement transfer of rights and interests of the digital collectible and the corresponding digital twin; where the digital collectible and the corresponding digital twin are obtained via minting and issuing a source file of the digital collectible based on the intellectual property (IP) copyright.

The secondary creation module 620 is used to, in response to receiving a secondary creation operation on the digital twin by a second user, obtain an NFT video ringtone; where the digital twin is authorized by the first user.

The management and display module 630 is used to display the NFT video ringtone for a third user to order and set.

In some possible embodiments, the rights transfer module 610 includes:

a recording submodule used to, in response to receiving a purchase request for a digital collectible from the first user, record an association relationship between the first user, the digital collectible, and the digital twin;
a chain submodule used to call the first smart contract interface to put the association relationship on-chain, thereby achieving transfer of rights and interests of the digital collectible and the corresponding digital twin.

In some possible embodiments, the device 600 further includes:

a subscription record module used to receive and record the third user's subscription request for the NFT video ringtone, and obtain a user subscription record;
a fee settlement module used to perform revenue distribution according to the user subscription record and a preset revenue split ratio; where the preset revenue split ratio is dynamically formulated based on service rules.

In some possible embodiments, the fee settlement module includes:

an obtaining submodule used to call a second smart contract interface to obtain a current total order number of the NFT video ringback tone;

a first determination submodule used to determine multiple participants of the NFT video ringback tone and a single subscription fee of the NFT video ringback tone based at least on the user subscription record;

a second determination submodule used to determine a total revenue share for each participant based on the preset revenue split ratio, the single subscription fee of the NFT video ringtone, and the current subscription number.

In some possible embodiments, the device 600 further includes:

a copyright cooperation module used to obtain authorization of IP copyright for a digital collectible;

a production module used to produce a source file and corresponding digital twin of the digital collectible based on the IP copyright;

a minting module used to complete minting and issuance of the source files of the digital collectible and the digital twin through a third smart contract interface.

In some possible embodiments, the production module includes:

a production submodule used to generate different source files of the digital collectible by combining preset content generation elements; where the preset content generation elements include at least the following parameters: video resolution, headwear, hairstyle, background, unique digital number;

a generation submodule used to, based on native content of the digital collectible, perform digital content watermarking and/or low-definition resolution processing to obtain the digital twin corresponding to the digital collectible.

In some possible embodiments, the device 600 further includes:

a prompting module used to prompt the second user to participate in a content secondary creation process of the digital twin through an authorization prompt interface;

an editing module used to, in response to the second user's confirmation of participation operation, display an editing interface for the second user to perform secondary creation operations on the digital twin; where the editing interface provides self-made templates and/or special effects, and is provided with preset controls; and the preset controls, when triggered, call a fourth smart contract interface to query attribute information of the source file of the digital collectible.

In some possible embodiments, the device 600 further includes:

an audit module used to review the NFT video ringtone;

a distribution module used to distribute the approved NFT video ringtone to a preset channel to display the NFT video ringtone.

The description of the above device embodiment is similar to the description of the above method embodiment, and has similar beneficial effects as the method embodiment. In some embodiments, the functions or modules included in the device provided by the embodiments of the present disclosure can be used to execute the method described in the above method embodiment. Technical details not disclosed in the device embodiment of the present application, can refer to the description of the method embodiment of the present application for understanding.

It should be noted that, in the embodiment of the present application, if the above video ringback tone setting method is implemented in the form of a software function module and sold or used as an independent products, they may be stored in a computer-readable storage medium. Based on this understanding, the essence of the technical solution of the present disclosure or the part that contributes to the related art or the part of the technical solution may be embodied in the form of a software product. The software product is stored in a storage medium, includes several instructions which enables a computer device (which may be a personal computer, a server, or a network device, etc.) to execute all or part of the steps of the methods described in various embodiments of the present disclosure. The foregoing storage medium includes various media capable of storing program codes such as U disk, mobile hard disk, ROM, RAM, magnetic disk or optical disk. In this way, the embodiment of the present application is not limited to any specific hardware, software or firmware, or any combination of hardware, software, and firmware.

One embodiment of the present disclosure further provides a computer device, including a memory and a processor. The memory stores a computer program that can be run on the processor. When the processor executes the program, some or all of the steps in the above method are implemented.

One embodiment of the present application provides a computer-readable storage medium on which a computer program is stored. When the computer program is executed by a processor, some or all of the steps in the above method are implemented. The computer-readable storage medium may be transient or non-transient.

One embodiment of the present application provides a computer program, including a computer-readable code. When the computer-readable code is run in a computer device, a processor in the computer device executes some or all of the steps for implementing the above method.

One embodiment of the present application provides a computer program product, which includes a non-transitory computer-readable storage medium storing a computer program. When the computer program is read and executed by a computer, some or all of the steps in the above method are implemented. The computer program product can be implemented specifically by hardware, software or a combination thereof. In some embodiments, the computer program product is specifically embodied as a computer storage medium, and in other embodiments, the computer program product is specifically embodied as a software product, such as a software development kit (SDK) and the like.

It should be noted here that the above description of the various embodiments tends to emphasize differences between the various embodiments, and the same or similar aspects can be referenced to each other. The description of the above device, storage medium, computer program and computer program product embodiments are similar to the description of the above method embodiment, and has similar beneficial effects as the method embodiment. Technical details not disclosed in the embodiments of the device, storage medium, computer program and computer program product of the present application, can refer to the description of the method embodiment of this application for understanding.

It should be noted that FIG. 7 is a schematic diagram of hardware entities of a computer device according to an embodiment of the present application. As shown in FIG. 7, hardware entities of the computer device 700 include: a processor 701, a communication interface 702, and a memory 703.

The processor 701 generally controls overall operation of the computer device 700.

The communication interface 702 enables the computer device to communicate with other terminals or servers through a network.

The memory 703 is configured to store instructions and applications executable by the processor 701, and can also cache data to be processed or processed by the processor 701 and each module in the computer device 700 (for example, image data, audio data, voice communication data, and video communication data), which can be implemented by flash memory or random access memory (RAM). Data transmission can be performed between the processor 701, the communication interface 702, and the memory 703 through the bus 704.

It should be understood that "one embodiment" or "an embodiment" mentioned throughout the specification means that specific features, structures or characteristics related to the embodiment are included in at least one embodiment of the present application. Therefore, "in one embodiment" or "in an embodiment" appearing throughout the specification does not necessarily refer to the same embodiment. In addition, these specific features, structures or characteristics can be combined in one or more embodiments in any suitable manner. It should be understood that in various embodiments of the present application, the size of the serial number of each step/process mentioned above does not mean the order of execution, and the execution order of each step/process should be determined by its function and internal logic, and should not constitute any limitation on the implementation process of the embodiment of the present application. The serial numbers of the embodiments of the present application mentioned above are for description only and do not represent the advantages and disadvantages of the embodiments.

It should be noted that, in this article, the terms "include", "comprises" or any other variations thereof are intended to cover non-exclusive inclusion, so that a process, method, article or device including a series of elements includes not only those elements, but also other elements not explicitly listed, or also includes elements inherent to such process, method, article or device. In the absence of further restrictions, an element defined by the sentence "comprises a ..." does not exclude the existence of other identical elements in the process, method, article or device including the element.

In the several embodiments provided in the present application, it should be understood that the disclosed devices and methods can be implemented in other ways. The device embodiments described above are only schematic. For example, the division of the units is only a logical function division. There may be other division methods in actual implementation, for example, multiple units or components can be combined, or can be integrated into another system, or some features can be ignored, or not executed. In addition, the coupling, direct coupling, or communication connection between the components shown or discussed can be through some interfaces, and the indirect coupling or communication connection of the devices or units can be electrical, mechanical or other forms.

The units described above as separate components may or may not be physically separated, and the components displayed as units may or may not be physical units; they may be located in one place or distributed on multiple network units; some or all of the units may be selected according to actual needs to achieve the purpose of the present embodiment.

In addition, all functional units in the embodiments of the present application may be integrated into one processing unit, or each unit may be a separate unit, or two or more units may be integrated into one unit; the above-mentioned integrated units may be implemented in the form of hardware or in the form of hardware plus software functional units.

A person skilled in the art can understand that all or part of the steps of implementing the above method embodiment can be completed by program instructing related hardware, and the aforementioned program can be stored in a computer-readable storage medium. When the program is executed, it executes the steps of the above method embodiment. The foregoing storage medium includes various media capable of storing program codes such as mobile storage devices, read-only memories (ROM), magnetic disk or optical disk.

Alternatively, if the above integrated unit of the present application is implemented in the form of a software function module and sold or used as an independent product, it can also be stored in a computer-readable storage medium. Based on this understanding, the essence of the technical solution of the present disclosure or the part that contributes to the related art or the part of the technical solution may be embodied in the form of a software product. The computer software product is stored in a storage medium, includes several instructions which enables a computer device (which may be a personal computer, a server, or a network device, etc.) to execute all or part of the steps of the methods described in various embodiments of the present disclosure. The foregoing storage medium includes various media capable of storing program codes such as mobile storage devices, read-only memories (ROM), magnetic disk or optical disk.

The above is only an implementation method of the present application, but the protection scope of the present application is not limited thereto. It should be noted that for those of ordinary skill in the art, several improvements and modifications can be made without departing from the principles described in the present disclosure. These improvements and modifications should be regarded as falling within the scope of protection of the present disclosure.

**Claims**

1. A video ring back tone setting method applied to a video ringback tone service platform, comprising:

   in response to receiving a purchase request for a digital collectible from a first user, calling a first smart contract interface to implement transfer of rights and interests of the digital collectible and corresponding digital twin; wherein the digital collectible and the corresponding digital twin are obtained via minting and issuing a source file of the digital collectible based on intellectual property, IP, copyright;
   in response to receiving a secondary creation operation on the digital twin by a second user, obtaining an NFT video ringtone; and
   displaying the NFT video ringtone for a third user to order and set.

2. The method according to claim 1, wherein in response to receiving a purchase request for a digital collectible from a first user, calling a first smart contract interface to implement transfer of rights and interests of the digital collectible and corresponding digital twin, includes:

   in response to receiving the purchase request for the digital collectible from the first user, recording an association relationship between the first user, the digital collectible, and the digital twin; and
   calling the first smart contract interface to put the association relationship on-chain, thereby achieving transfer of rights and interests of the digital collectible and the corresponding digital twin.

3. The method according to claim 1, wherein after displaying the NFT video ringtone, the method further includes:

   receiving and recording the third user's subscription request for the NFT video ringtone, and obtaining a user subscription record;
   performing revenue distribution according to the user subscription record and a preset revenue split ratio; wherein the preset revenue split ratio is dynamically formulated based on service rules.

4. The method according to claim 3, wherein the performing revenue distribution according to the user subscription record and a preset revenue split ratio, includes:

   calling a second smart contract interface to obtain a current total order number of the NFT video ringback tone;
   determining multiple participants of the NFT video ringback tone and a single subscription fee of the NFT video ringback tone based at least on the user subscription record;
   determining a total revenue share for each participant based on the preset revenue split ratio, the single subscription fee of the NFT video ringtone, and the current subscription number.

5. The method according to any one of claims 1 to 4, wherein before receiving the purchase request for the digital collectible from the first user, the method further includes:

obtaining authorization of IP copyright for the digital collectible;
producing a source file and corresponding digital twin of the digital collectible based on the IP copyright;
completing minting and issuance of the source file of the digital collectible and the digital twin through a third smart contract interface.

6. The method according to claim 5, wherein the producing a source file and corresponding digital twin of the digital collectible based on the IP copyright, includes:

generating different source files of the digital collectible by combining preset content generation elements;
wherein the preset content generation elements include at least the followings: video resolution, headwear, hairstyle, background, unique digital number;
performing digital content watermarking and/or low-definition resolution processing to obtain the digital twin corresponding to the digital collectible, based on native content of the digital collectible.

7. The method according to any one of claims 1 to 4, wherein after transfer of rights and interests of the digital twin, the method further includes:

prompting the second user to participate in a content secondary creation process of the digital twin through an authorization prompt interface;
in response to the second user's confirmation of participation operation, displaying an editing interface for the second user to perform secondary creation operations on the digital twin; wherein the editing interface provides self-made templates and/or special effects, and is provided with preset controls, and the preset controls, when triggered, call a fourth smart contract interface to query attribute information of the source file of the digital collectible.

8. The method according to any one of claims 1 to 4, wherein after obtaining the NFT video ringtone, the method further includes:

reviewing the NFT video ringtone;
distributing the approved NFT video ringtone to a preset channel to display the NFT video ringtone.

9. A video ringback tone setting device, comprising:

a rights transfer module configured to, in response to receiving a purchase request for a digital collectible from a first user, call a first smart contract interface to implement transfer of rights and interests of the digital collectible and the corresponding digital twin; wherein the digital collectible and the corresponding digital twin are obtained via minting and issuing a source file of the digital collectible based on the intellectual property (IP) copyright;
a secondary creation module configured to, in response to receiving a secondary creation operation on the digital twin by a second user, obtain an NFT video ringtone; where the digital twin is authorized by the first user;
a management and display module configured to display the NFT video ringtone for a third user to order and set.

10. A computing device, comprising: a processor and a memory; wherein the memory stores a computer program executable on the processor; wherein the computer program, when executed by the processor, causes the processor to perform the method according to any one of claims 1 to 8.

11. A computer-readable storage medium, comprising a computer program stored thereon; wherein the computer program, when executed by a processor, causes the processor to perform the method according to any one of claims 1 to 8.

in response to receiving a purchase request for a digital collectible from a first user, calling a first smart contract interface to implement transfer of rights and interests of the digital collectible and the corresponding digital twin.

S110

in response to receiving a secondary creation operation on the digital twin by a second user, obtaining an NFT video ringtone

S120

displaying the NFT video ringtone for a third user to order and set

S130

FIG. 1

in response to receiving a purchase request for a digital collectible from a first user, calling a first smart contract interface to implement transfer of rights and interests of the digital collectible and the corresponding digital twin. — S210

in response to receiving a secondary creation operation on the digital twin by a second user, obtaining an NFT video ringtone — S220

displaying the NFT video ringtone for a third user to order and set — S230

receiving and recording a third user's subscription request for the NFT video ringtone, and obtaining a user subscription record — S240

performing revenue distribution according to the user subscription record and a preset revenue split ratio — S250

FIG. 2

obtaining authorization of IP copyright for a digital collectible — S310

↓

producing a source file and corresponding digital twin of the digital collectible based on the IP copyright — S320

↓

completing minting and issuance of the source files of the digital collectible and the digital twin through a third smart contract interface — S330

↓

in response to receiving a purchase request for the digital collectible from a first user, calling a first smart contract interface to implement transfer of rights and interests of the digital collectible and the corresponding digital twin — S340

↓

in response to receiving a secondary creation operation on the digital twin by a second user, obtaining an NFT video ringtone — S350

↓

displaying the NFT video ringtone for a third user to order and set — S360

FIG. 3

1080P          720P

FIG. 4

| video ringback tone access module 51 |
|---|

| NFT capability module 52 | video ringback tone DIY production module 53 | video ringback tone distribution management module 54 | video ringback tone management and display module 55 | settlement and billing module 56 |
|---|---|---|---|---|

FIG. 5A

FIG. 5B

EP 4 618 524 A1

FIG. 5C

device 600

rights transfer module 610

secondary creation module 620

management and display module 630

FIG. 6

computer device 700

702

communication
interface

703

memory

bus 704

701

processor 701

701

FIG. 7

## INTERNATIONAL SEARCH REPORT

International application No.

**PCT/CN2023/112664**

| A. | CLASSIFICATION OF SUBJECT MATTER |
|---|---|

H04M3/42(2006.01)i

According to International Patent Classification (IPC) or to both national classification and IPC

| B. | FIELDS SEARCHED |
|---|---|

Minimum documentation searched (classification system followed by classification symbols)

IPC: H04M

Documentation searched other than minimum documentation to the extent that such documents are included in the fields searched

Electronic data base consulted during the international search (name of data base and, where practicable, search terms used)

DWPI, CNPAT, ENTXT, CNKI: 版权, 彩铃, 创作, 发行, 非同质化, 合约, 视频彩铃, 授权, 数字藏品, 数字孪生品, 知识产权, 铸造, NFT; video, polyphonic, ringtone, digital, contract, twin, IP, copyright, NFT, cast, issue;

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 116723270 A (MIGU CULTURE TECHNOLOGY CO., LTD. et al.) 08 September 2023 (2023-09-08)<br>claims 1-11 | 1-11 |
| A | CN 101043551 A (ZTE CORP.) 26 September 2007 (2007-09-26)<br>claim 1 | 1-11 |
| A | CN 101370055 A (CHINA TELECOM CORP., LTD.) 18 February 2009 (2009-02-18)<br>entire document | 1-11 |
| A | CN 110875984 A (HUAWEI TECHNOLOGIES CO., LTD.) 10 March 2020 (2020-03-10)<br>entire document | 1-11 |
| A | WO 2020156206 A1 (HUAWEI TECHNOLOGIES CO., LTD.) 06 August 2020 (2020-08-06)<br>entire document | 1-11 |
| A | WO 2021073252 A1 (HUAWEI TECHNOLOGIES CO., LTD.) 22 April 2021 (2021-04-22)<br>entire document | 1-11 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **15 November 2023** | **22 November 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/112664**

| Patent document cited in search report | | | Publication date (day/month/year) | Patent family member(s) | | | Publication date (day/month/year) |
|---|---|---|---|---|---|---|---|
| CN | 116723270 | A | 08 September 2023 | None | | | |
| CN | 101043551 | A | 26 September 2007 | None | | | |
| CN | 101370055 | A | 18 February 2009 | None | | | |
| CN | 110875984 | A | 10 March 2020 | None | | | |
| WO | 2020156206 | A1 | 06 August 2020 | EP | 3905652 | A1 | 03 November 2021 |
| | | | | EP | 3905652 | A4 | 23 February 2022 |
| | | | | EP | 3905652 | B1 | 31 May 2023 |
| | | | | US | 2021360102 | A1 | 18 November 2021 |
| | | | | CN | 111491062 | A | 04 August 2020 |
| | | | | CN | 112261231 | A | 22 January 2021 |
| WO | 2021073252 | A1 | 22 April 2021 | EP | 4033713 | A1 | 27 July 2022 |
| | | | | EP | 4033713 | A4 | 02 November 2022 |
| | | | | US | 2022240128 | A1 | 28 July 2022 |
| | | | | CN | 112671674 | A | 16 April 2021 |
| | | | | CN | 116320182 | A | 23 June 2023 |

Form PCT/ISA/210 (patent family annex) (July 2022)

**REFERENCES CITED IN THE DESCRIPTION**

**Patent documents cited in the description**

- CN 202211412274